# EUROPEAN PATENT SPECIFICATION

(11) **EP 2 089 790 B1**
(45) Date of publication and mention of the grant of the patent: **02.01.2019**
(21) Application number: 07736044.4
(22) Date of filing: 29.05.2007
(51) Int. Cl.: G06F 3/023

(54) **INPUT PREDICTION**
EINGABEPRÄDIKTION
PRÉDICTION DE SAISIE

(30) Priority: 27.11.2006 US 867300 P; 26.01.2007 US 627591
(43) Date of publication of application: 19.08.2009
(73) Proprietor: Sony Mobile Communications Inc., Shinagawa-ku Tokyo 140-0002 (JP)
(72) Inventor: THORN, Ola Karl, 211 45 Malmö (SE)
(74) Representative: Kraus & Weisert Patentanwälte PartGmbB
(86) International application number: PCT/IB2007/052022
(87) International publication number: WO 2008/065549

(56) References cited:
- EP-A- 1 630 645
- WO-A-03/060451
- US-A- 5 963 671
- US-A1- 2004 044 422

## Description

### TECHNICAL FIELD OF THE INVENTION

The invention relates generally to communications and, more particularly, to word prediction based on user input.

### DESCRIPTION OF RELATED ART

Communication devices, such as mobile terminals, may be used by individuals for communicating with users of other communication devices. For example, a communication device may be used to place/receive calls and send/receive text messages to/from other communication devices. Communication devices typically allow the user to enter text, such as text messages, via an alpha-numeric keypad.

In WO03/060451A1 an alphanumeric information entry process is described using a personal context model for alphanumeric information prediction. Provision and use of a personal context model is described that correlates various examples of user context against a unique personal language model for that user.

US2004/00444422A1 relates to systems and methods for intelligent text input. A plurality of text input components may be used to receive text input events from an input device. A text input directing engine may be used to translate a text input event into a platform-independent event. The platform-independent event may include an index value that represents the text input event.

US5,963,671A discloses a method and device for determining the most likely to be used characters and controls of a keyboard from consulting trigram tables, which determined characters and controls then are enhanced and/or positioned to attract the user and to facilitate quick recognition and selection.

EP1630645A1 discloses a handheld electronic device which enables editing during text entry. The device also provides a learning function that allows a disambiguation function to adapt to provide a customized experience for the user.

### SUMMARY

According to one aspect, a communication device according to any one of claims 1-4 is provided.

According to another aspect, a method in a communication device according to any one of claims 5-7 is provided.

According to a further aspect, a computer-readable medium according to any one of claims 8-9 is provided.

### BRIEF DESCRIPTION OF THE DRAWINGS

Reference is made to the attached drawings, wherein elements having the same reference number designation may represent like elements throughout.
Fig. 1 is a diagram of an exemplary system in which methods and systems described herein may be implemented;
Fig. 2 is a diagram of a communication device of Fig. 1 according to an exemplary implementation;
Fig. 3 is a functional block diagram of components of the communication device of Fig. 2 according to an exemplary implementation;
Fig. 4 is a functional block diagram of word prediction components implemented in the communication device of Fig. 3 according to an exemplary implementation;
Fig. 5 is a diagram of a portion of the database of Fig. 4 according to an exemplary implementation; and
Fig. 6 is a flow diagram illustrating exemplary processing by the communication device of Fig. 1.

### DETAILED DESCRIPTION

The following detailed description of the invention refers to the accompanying drawings. The same reference numbers in different drawings identify the same or similar elements. Also, the following detailed description does not limit the invention. Instead, the scope of the invention is defined by the appended claims.

### EXEMPLARY SYSTEM

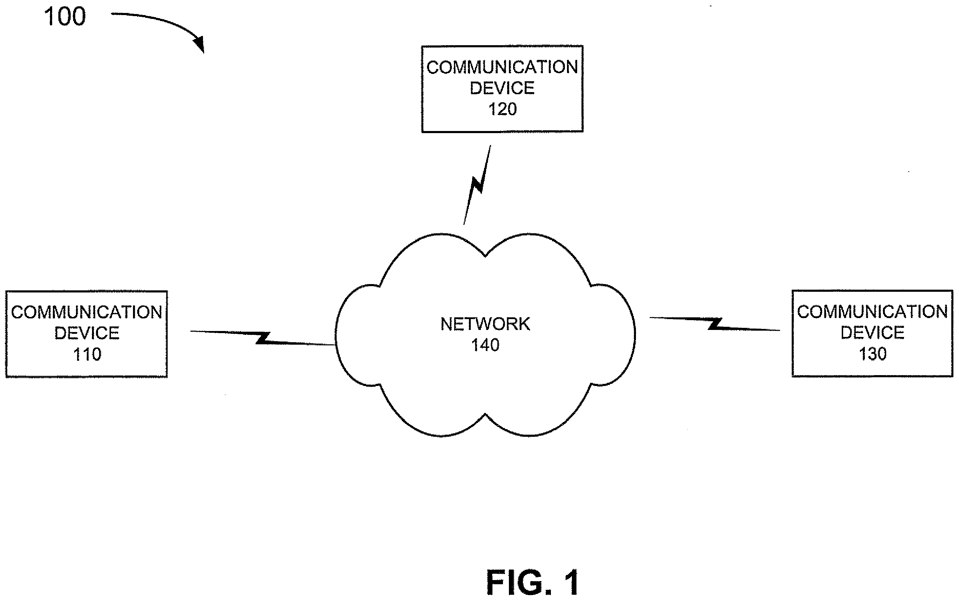

Fig. 1 is a diagram of an exemplary system 100 in which methods and systems described herein maybe implemented. System 100 may include communication devices 110, 120 and 130 connected via network 140. The exemplary configuration illustrated in Fig. 1 is provided for simplicity. It should be understood that a typical system may include more or fewer devices than illustrated in Fig. 1. In addition, other devices that facilitate communications between the various entities illustrated in Fig. 1 may also be included in system 100.

Communication devices 110-130 may each include any type of conventional device that is able to communicate via a network. For example, communication devices 110-130 may include any type of device that is capable of transmitting and receiving data (e.g., voice, text, images, multi-media data) to/from network 140. In an exemplary implementation, one or more of communication devices 110-130 may be a mobile terminal. As used herein, the term "mobile terminal" may include a cellular radiotelephone with or without a multi-line display; a Personal Communications System (PCS) terminal that may combine a cellular radiotelephone with data processing, facsimile and data communications capabilities; a personal digital assistant (PDA) that can include a radiotelephone, pager, Internet/Intranet access, Web browser, organizer, calendar and/or a global positioning system (GPS) receiver; and a conventional laptop and/or palmtop receiver or other appliance that includes a radiotelephone transceiver. Mobile terminals may also be referred to as "pervasive computing" devices.

In an alternative implementation, one or more of communication devices 110-130 may include any client device, such as a personal computer (PC), a laptop computer, a PDA, a web-based appliance, etc. Communication devices 110, 120 and 130 may communicate with each other over network 140 via wired, wireless or optical connections.

Network 140 may include one or more networks including a cellular network, a satellite network, the Internet, a telephone network, such as the Public Switched Telephone Network (PSTN), a metropolitan area network (MAN), a wide area network (WAN), a local area network (LAN), a mesh network or another type of network. In an exemplary implementation, network 140 includes a cellular network that uses components for transmitting data to and from communication devices 110, 120 and 130. Such components may include base station antennas (not shown) that transmit and receive data from communication devices within their vicinity. Such components may also include base stations (not shown) that connect to the base station antennas and communicate with other devices, such as switches and routers (not shown) in accordance with known techniques.

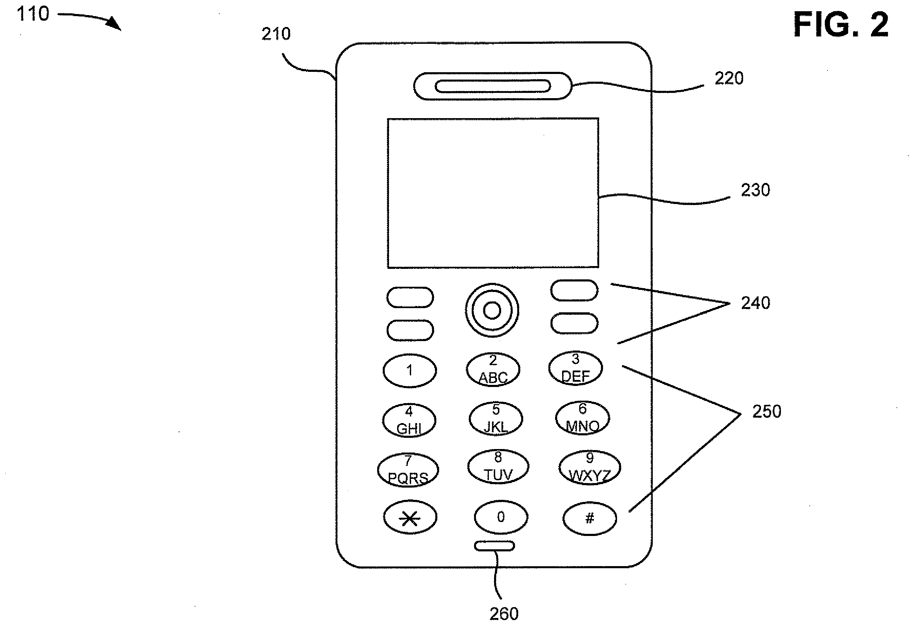

Fig. 2 is a diagram of an exemplary communication device 110 in which methods and systems described herein may be implemented. The invention is described herein in the context of a communication device. It should also be understood that systems and methods described herein may also be implemented in other devices that allow users to enter information via an alpha-numeric keypad, with or without including various other communication functionality. For example, communication device 110 include a personal computer (PC), a laptop computer, a PDA, a media playing device (e.g., an MPEG audio layer 3 (MP3) player, a video game playing device), etc., that does not include various communication functionality for communicating with other devices.

Referring to Fig. 2, communication device 110 may include a housing 210, a speaker 220, a display 230, control buttons 240, a keypad 250, and a microphone 260. Housing 210 may protect the components of communication device 110 from outside elements. Speaker 220 may provide audible information to a user of communication device 110.

Display 230 may provide visual information to the user. For example, display 230 may provide information regarding incoming or outgoing telephone calls and/or incoming or outgoing electronic mail (e-mail), instant messages, short message service (SMS) messages, etc. Display 230 may also display information regarding various applications, such as a phone book/contact list stored in communication device 110, the current time, video games being played by a user, downloaded content (e.g., news or other information), etc.

Control buttons 240 may permit the user to interact with communication device 110 to cause communication device 110 to perform one or more operations, such as place a telephone call, play various media, etc. For example, control buttons 240 may include a dial button, hang up button, play button, etc. In an exemplary implementation, control buttons 240 may include one or more buttons that controls various applications associated with display 230. For example, one of control buttons 240 may be used to execute an application program, such as a messaging program, a contacts program, a task list program, a game program, etc. Further, one of control buttons 240 may be a menu button that permits the user to view options associated with executing various application programs stored in communication device 110.

Keypad 250 may include a standard telephone keypad. As illustrated, many of the keys on keypad 250 may include numeric values and various letters. For example, the key with the number 2 includes the letters A, B and C. These letters may be used by a user when inputting text to communication device 110. Microphone 260 may receive audible information from the user.

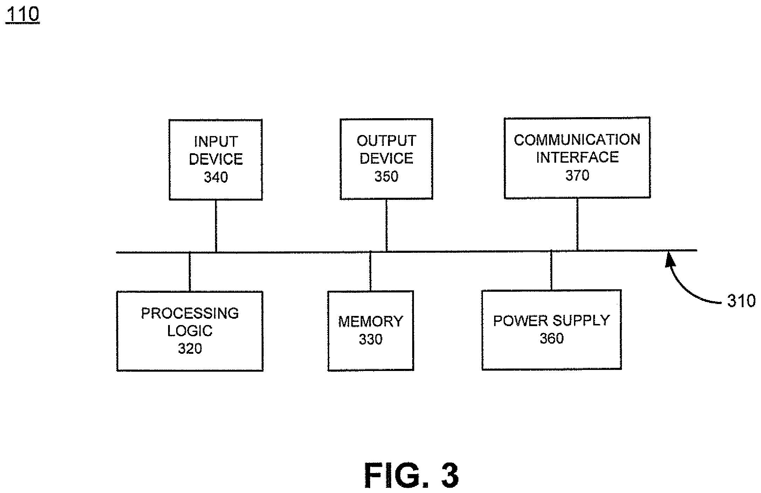

Fig. 3 is a diagram illustrating components of communication device 110 according to an exemplary implementation. Communication device 110 may include bus 310, processing logic 320, memory 330, input device 340, output device 350, power supply 360 and communication interface 370. Bus 310 permits communication among the components of communication device 110. One skilled in the art would recognize that communication device 110 may be configured in a number of other ways and may include other or different elements. For example, communication device 110 may include one or more modulators, demodulators, encoders, decoders, etc., for processing data.

Processing logic 320 may include a processor, microprocessor, an application specific integrated circuit (ASIC), field programmable gate array (FPGA) or the like. Processing logic 320 may execute software instructions/programs or data structures to control operation of communication device 110.

Memory 330 may include a random access memory (RAM) or another type of dynamic storage device that stores information and instructions for execution by processing logic 320; a read only memory (ROM) or another type of static storage device that stores static information and instructions for use by processing logic 320; a flash memory (e.g., an electrically erasable programmable read only memory (EEPROM)) device for storing information and instructions; and/or some other type of magnetic or optical recording medium and its corresponding drive. Memory 330 may also be used to store temporary variables or other intermediate information during execution of instructions by processing logic 320. Instructions used by processing logic 320 may also, or alternatively, be stored in another type of computer-readable medium accessible by processing logic 320. A computer-readable medium may include one or more memory devices and/or carrier waves.

Input device 340 may include mechanisms that permit an operator to input information to communication device 110, such as microphone 260, keypad 250, control buttons 240, a keyboard (e.g., a QUERTY keyboard, a Dvorak keyboard), a gesture-based device, an optical character recognition (OCR) based device, a joystick, a touch-based device, a virtual keyboard, a speech-to-text engine, a mouse, a pen, voice recognition and/or biometric mechanisms, etc.

Output device 350 may include one or more mechanisms that output information to the user, including a display, such as display 230, a printer, one or more speakers, such as speaker 220, etc. Power supply 360 may include one or more batteries or other power source components used to supply power to components of communication device 110.

Communication interface 370 may include any transceiver-like mechanism that enables communication device 110 to communicate with other devices and/or systems. For example, communication interface 370 may include a modem or an Ethernet interface to a LAN. Communication interface 370 may also include mechanisms for communicating via a network, such as a wireless network. For example, communication interface 370 may include one or more radio frequency (RF) transmitters, receivers and/or transceivers and one or more antennas for transmitting and receiving RF data via network 140.

Communication device 110 may provide a platform for a user to make and receive telephone calls, send and receive electronic mail, text messages, multi-media messages, short message service (SMS) messages, etc., and execute various other applications. Communication device 110, as described in detail below, may also perform processing associated with performing input or word prediction based on user input(s). Communication device 110 may perform these operations in response to processing logic 320 executing sequences of instructions contained in a computer-readable medium, such as memory 330. Such instructions may be read into memory 330 from another computer-readable medium via, for example, communication interface 370. A computer-readable medium may include one or more memory devices and/or carrier waves. In alternative embodiments, hard-wired circuitry may be used in place of or in combination with software instructions to implement processes consistent with the invention. Thus, implementations described herein are not limited to any specific combination of hardware circuitry and software.

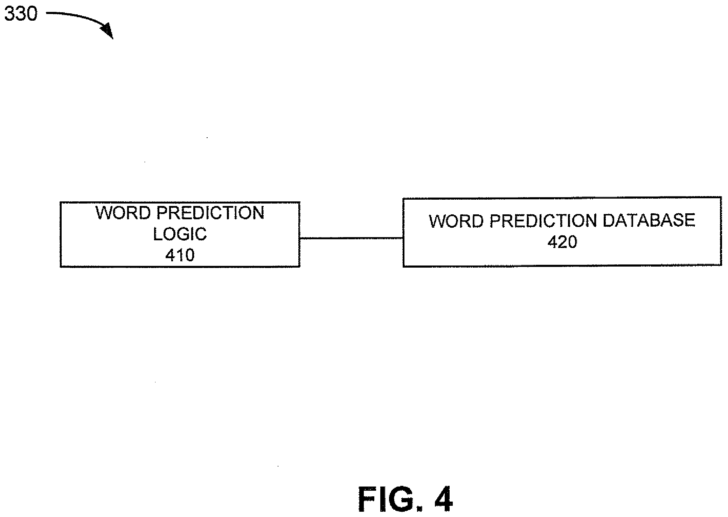

Fig. 4 is an exemplary functional block diagram of components implemented in communication device 110 of Fig. 3, such as in memory 330. Referring to Fig. 4, memory 330 may include word prediction logic 410 and word prediction database 420.

Word prediction logic 410 may include logic used to predict characters, next characters, word completion, words, next words and/or phrases as data is being entered or typed by a user of communication device 110, such as via keypad 250. Word prediction logic 410 may provide candidate characters, next characters, word completion, words, next words and/or phrases to the user via, for example, display 230 as the user is entering the text via keypad 250. The terms "candidate character," "candidate next character,"
"candidate word completion," "candidate word, "candidate next word" or "candidate phrase," as used herein refer to a character, next character, word, next word or phrase, respectively, that potentially matches the character/word/phrase that the user intends to input via keypad 250. In an exemplary implementation, word prediction logic 410 may determine what particular application is being executed by communication device 110 and perform word prediction based on the particular application that communication device 110 is currently executing, as described in detail below.

Word prediction database 420 may include a database of common words and/or phrases. In some implementations, word prediction database 420 may be dynamically updated as the user of communication device 110 enters information and/or receives information. In an exemplary implementation, words in word prediction database 420 may be tagged with various identifiers.

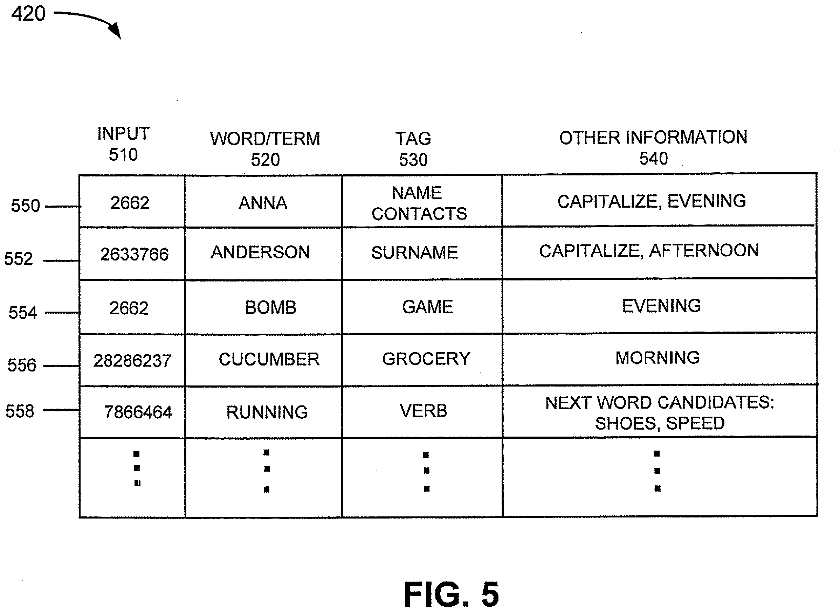

For example, in one implementation, word prediction database 420 may include an input field 510, a word/term field 520, a tag field 530 and an other information field 540, as illustrated in Fig. 5. Input field 510 may correspond to data input via keypad 250. For example, in entry 550, input 2662 in input field 510 corresponds to a user entering the numbers 2662 via keypad 250. Word/term field 520 may include a number of commonly used words and phrases that are most often used in a particular language and that correspond to the input in field 510. Tag field 530 may include various identifiers associated with the respective words in field 520. For example, information in field 530 may indicate whether the corresponding word in field 520 is a name, a noun, a verb, an adjective, etc. Referring to Fig. 5, the words "Anna" and "Anderson" in field 520 of entries 550 and 552 may include the tags name and surname, respectively, in tag field 530. Tags may also include information type, such as a descriptor associated with a word. For example, the word "cucumber" may be tagged as a noun and/or as a vegetable. The word "cucumber" may also be identified as a grocery product, as illustrated by entry 556 in Fig. 5. Tag field 530 may include other information, such as whether the word/term in field 530 is a uniform resource locator (URL). In each case, the information in tag field 530 may be used by word prediction logic 410 when generating candidate words or candidate characters based on user input, as described in detail below.

Other information field 540 may include additional information associated with each of the words/terms in field 520. For example, other information field 540 may include time information associated with an entry in field 520, such as when that particular word/term has been most frequently used and/or is most likely to be used in the future, various punctuation associated with an entry in field 520, next word candidates that have been used and/or are likely to be used following the word/term in field 520, as described in more detail below.

In some implementations, communication device 110 may receive word prediction database 420 with the words already tagged. That is, word prediction database 420 may be prestored on communication device 110 with the information in fields 510, 520, 530 and 540 already provided. In some implementations, a tagged database may be purchased from and/or retrieved from an external entity and loaded on communication device 110. In such implementations, the tagged database may be pre-tagged with information to aid in word prediction, such as information in fields 510-540. For example, the tagged database may include information indicating that the word "Anna" is a name and is more likely to be used in a contacts or address book application, the terms "www" or "http://" are more likely to appear in a web/mail based application, etc.

In other implementations, processing logic 320 may tag or add information to words in word prediction database 420 in an automatic manner. For example, assume that the user of communication device 110 is entering a contact in a contacts list or address book application executed by communication device 110, such as the name Anderson. In this case, processing logic 320 may automatically tag "Anderson" as a surname and also indicate that "Anderson" should always be capitalized (e.g., start with a capital A), as indicated by entry 552 in Fig. 5.

Processing logic 320 may also provide other information, such as the time or time interval (e.g., morning, afternoon, evening, late evening) at which the user of communication device 110 entered the term/word in field 520, as indicated by entries 550, 552, 554 and 556 in Fig. 5. For example, assume that the user entered the contact Anderson at 2:00 PM in communication device 110. Processing logic 320 may then include the label "afternoon" in other information field 540 of entry 552 indicating that the user originally input the name Anderson in the afternoon. Processing logic 320 may dynamically update the time/time interval information in other information field 540 over time based on the user inputting the particular word/term in field 520 to indicate a most likely or most frequent time of day or interval during which the particular word/term was entered by the user.

Processing logic 320 may also include a location associated with communication device 110 when the information was entered or received by communication device 110 (e.g., work, home, etc.), etc. For example, if the user of communication device 110 generates an e-mail message (or receives an e-mail) at work that includes a particular term, such as the term "semiconductor," processing logic 320 may store that word (i.e., semiconductor) in word/term field 520 and may also store the label "work" in other information field 540 of that entry. This may be used to indicate terms that are most likely to be input by the user of communication device 110 while the user is at a particular location, such as at work. To provide the location information, communication device 110 may include, for example, a global positioning system (GPS) that enables communication device 110 to determine its location. The actual location may then be correlated to a work location, home location, vacation location, etc. These tags and/or other information included in fields 530 and 540 may be used when word prediction logic 410 is generating candidate characters, words, next words, phrases based on user input, as described in detail below.

As described above, in conventional systems, each alphanumeric button on keypad 250 (Fig. 2) may correspond to one of three different letters. For example, when a user inputs the number "2" via a conventional keypad (when executing a text based application), the corresponding text may be any of the letters A, B or C. In a conventional T9/Zi type predictive input scheme, a messaging program guesses or predicts which letter the user intended to type. For example, if the user enters "843," a conventional messaging program may assume that the user intended to enter the word "the." In such systems, the messaging program may use a dictionary of common words to predict what a user wishes to input. Such conventional systems, however, are often unable to find the correct word in various scenarios, such as when the user is entering words/terms not frequently used. In addition, conventional systems do not base the word prediction process on the particular application being executed.

In an exemplary implementation, word prediction logic 410 identifies the application being currently executed and uses this information to determine candidate characters, words, next characters, next words and phrases as described in detail below.

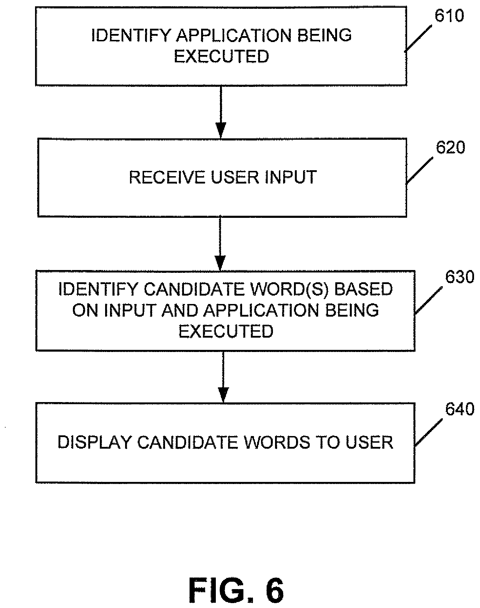

Fig. 6 illustrates exemplary processing performed by communication device 110. Processing may begin with word prediction logic 410 identifying the application currently being executed by communication device 110 or the application with which the user of communication device 110 is currently interacting (act 610). For example, word prediction logic 410 may determine that communication device 110 is currently interacting with a contacts application which stores names, e-mail addresses, phone numbers, etc., of various contacts (e.g., friends, family, co-workers, etc.). In this case, word prediction logic 410 may identify the contacts program as being the relevant application. Alternatively, word prediction logic 410 may determine that communication device is interacting with a "notes" program on communication device 110 in which the user can enter various information, is generating an e-mail message via an e-mail program, generating a short message service (SMS) message, generating tasks for a "task list" program, entering information for posting on a blog, playing a game, etc. In each case, word prediction logic 410 identifies the relevant application being executed.

Assume that the user has entered a number of inputs via keypad 250 (act 620). For example, assume that the user has entered "2662" via keypad 250. Further assume that word prediction logic 410 has identified the contacts application program as being the relevant application being executed by communication device 110. In this case, word prediction logic 410 may access word prediction database 420 and search for candidate words that match the input "2662" and also include tag data associated with the contacts application program (act 630). In this example, word prediction logic 420 may identify the name "Anna" in entry 550 as corresponding to the input 2662 since entry 550 includes the tag information of "contacts" and "name" in field 530. That is, word prediction logic 410 may search for entries that include the tag of "contacts" and/or "name" in field 520 and that match the input of 2662 in field 510. This information in field 530 may indicate that Anna is the name of a contact stored in the contacts application executed by communication device 110. In this case, word prediction logic 410 may identify "Anna" as being a candidate word corresponding to the entry 2662 (entered via keypad 250) and may provide this candidate word to the user via display 230 (act 640). If this is the word that the user intended to input, the user may select the candidate word using, for example, one of control keys 240.

In this manner, word prediction logic 410 is more likely to identify a name, such as "Anna" as opposed to a candidate word "bomb," which may be included in entry 554 of word prediction database 420 which also matches the keypad input of "2662". The tag information in field 530 for entry 554, however, indicates that the word "bomb" is associated with a game. Therefore, since communication device 110 is not currently executing a game application, word prediction logic 410 may not identify the word "bomb" as a candidate word. In other implementations, word prediction logic 410 may display both candidate words (e.g., Anna and bomb) to the user via display 230, with Anna being displayed in a more prominent manner in the candidate list (e.g., shown higher in a list of a number of words provided via display 230, shown in a bolder or larger font, etc.) than the word "bomb."

In other implementations, word prediction logic 410 may not include pre-configured information indicating that Anna is a name. For example, if the user chooses to input Anna a first time, word prediction logic 410 may store the word "Anna" in word prediction database 420. The next time an input, such as the input 2662 via keypad 250 is received, word prediction logic 410 may identify Anna as the likely text that that user intends to input based on previous usage of the word Anna, as opposed to the fact that "Anna" is stored in word prediction database 420 as a name.

Word prediction logic 410 may also identify writing style, syntax and/or phrase combinations to identify verbs, nouns, word combinations, phrases, etc., that are typical for certain applications to aid in performing word/next word prediction. For example, a user may input or write information in one way for certain applications and input/write information in another way for another application. As an example, a user may input/write "buy milk," while interacting with a task list application, but may input/write "I bought this gallon of milk the other day and it was very good," while interacting with a blog application. Word prediction logic 410 may then use this writing style information to aid in word and phrase prediction based on the particular application being executed by communication device 110.

Word prediction logic 410 may also use various statistical tools in analyzing input from a user. For example, word prediction logic 410 may use a statistical tool, such as n-grams, to perform, for example, next word prediction, syntax related prediction, etc. An n-gram is a subsequence of n items from a given sequence. Word prediction logic 410 may use n-grams to aid in performing word completion and next word prediction. Word prediction logic 410 may also use other statistical tools to aid in word prediction, including using word frequencies to determine a word/next word based on statistical probabilities associated with word frequency usage. Word prediction logic 410 may also use syntax, grammar and writing style information associated with the user based on, for example, information gathered over time associated with input provided by the user, to aid in word/next word prediction.

As another example, assume that the user is entering information into a task list program stored on communication device 110. In this case, assume that the user enters "233". In this example, word prediction logic 410 may determine that communication device 110 is executing a task list application and may identify words with the tag of "verb" since the task list will more likely include action verbs associated with tasks that a user may want to perform during the day. In this case, assume that the word "add" (which corresponds to the input 233) is stored in word prediction database 420 with the tag "verb" and that "bed" (which also corresponds to the input 233) is stored in word prediction database 420 with the tag "noun". In this case, word prediction logic 410 may identify the candidate word "add" as being the more likely word that the user intended to input, as opposed to the word "bed". In an exemplary implementation, word prediction logic 410 may provide the candidate word "add" at a higher location on a candidate list provided to the user via display 230 than the word "bed". The user may then select the desired word.

As still another example, assume that the user enters the keypad input "282" and that communication device 110 is executing a grocery list application program. In this case, word prediction logic 410 may search database 420 and identify cucumber in entry 556 as being the most likely word the user is attempting to enter since the word cucumber includes the tag grocery in field 530 of entry 556. In this example, word prediction logic 410 was able to identify a candidate word (i.e., cucumber) prior to the user entering all of the characters in the word. In other implementations, the candidate word may be provided even earlier in the input, such as after the user has entered only a single keypad input or after two keypad inputs. In each case, word prediction logic 410 maybe able to identify the word that the user intends to input much earlier in the process than in conventional systems and without providing a list of candidate words that is too long for the user to quickly scroll through to identify the word he/she intends to input.

In addition, word prediction logic 410 may be able to predict or anticipate next words and/or phrases the user intends to input. For example, after inputting a name, such as Anna, word prediction logic 410 may determine that it is likely that the user intends to follow the name Anna with a surname. In this manner, word prediction logic 410 may determine a next most likely word candidate in word prediction database 420 that includes a tag or data indicating that the word is a name and/or surname. As an example, if the name Anna Anderson is stored in the contacts list application on communication device 110, word prediction logic 410 may provide the candidate word "Anderson" immediately after the user selects the name "Anna." Alternatively, word prediction logic 410 may wait until the user begins providing input via keypad 250 and then search for a surname that matches the portion of the input provided by the user.

As discussed above, various tags/other information in fields 530 and 540 in word prediction database 420 may include time and location information. In a similar manner, word prediction logic 410 may use this time and location information to further enhance the word prediction process. For example, if a user is entering information into an instant messaging (IM) program executed by communication device 110 at 11:00 PM, word prediction logic 410 may identify words that include time information associated with evening usage. For example, the words "movie," "drinks," "cab," etc., may be tagged in word prediction database 420 as most frequently used or most likely being used in the evening or late evening. When the user is composing the IM, word prediction logic 410 may weight terms with the appropriate tag (e.g., evening or late evening in this example) higher in the candidate list than other candidate words. In this manner, when multiple candidate words exist, the word or words that match the tag/other information are displayed to the user in a more prominent manner (e.g., higher in the candidate list, in a bolder or larger font, etc.) than words with non-matching tag/other information. Similarly, if the user is at his/her work location when composing an e-mail message, word prediction logic 410 may search word prediction database 420 for words with the corresponding location in other information field 540 being "work" (or a physical address corresponding to the user's work address) indicating that the candidate words are associated with the user's work location or weight words associated with "work" may be weighted as more likely word candidates that those not associated with work.

As still another example, assume that the user has entered "99" via keypad 250. In this case, word prediction logic 410 determines that the user intends to identify the letters "ww" and provides these letters in the display. Word prediction logic 410 may also search for words/terms identified as URLs in word prediction database 420 since the letters "ww" are frequently used when attempting to identify the letters "www" preceding an Internet web site or URL. In this manner, difficult to enter URLs are more likely to be quickly identified, thereby saving the user considerable time in inputting expressions (e.g., URLs) that may be difficult to enter via keypad 250.

As described briefly above, the information in word prediction database 420 may be used to perform next word prediction based on the particular application communication device 110 is currently executing. For example, certain words are more likely to appear after other words in certain applications. As an example, suppose the user of communication device 110 has a blog about a special interest, such as running. In this blog, further assume that the words "run," "ran," "shoes" and "speed," often appear in various phrases. For example, after the word "running", the terms "shoes" and "speed" have been frequently used, as indicated by other information field 540 for entry 558 in Fig. 5. In this case, word prediction logic 410 may provide the candidate word(s) "shoes" and/or "speed" after "running" has been entered/accepted by the user, based on the other information field 540 of entry 558. In this example, processing logic 320 may tag certain words frequently used in the blog and groups of words/phrases that often occur in sequence to further aid in next word prediction.

As discussed above, in some implementations, a tagged database that is already tagged with tag and other information, such as the information in fields 530 and 540, may be purchased and/or retrieved from an external entity and loaded on communication device 110. In other implementations, word prediction logic 410 may automatically tag words and/or phrases as they are input and/or received by communication device 110. In each case, word prediction logic 410 may determine that "running" and "speed" are commonly used together and/or have been written many times (such as in the user's blog) and are therefore related. Word prediction logic 410 may then identify next word candidates based on the particular application being executed and the additional data stored in word prediction database 420.

Word prediction logic 410 may also identity misspellings and/or correct or autocorrect misspellings based on the application. For example, the input corresponding to "wiifm" (e.g., 94436 via keypad 250) may be a shorthand/slang expression corresponding to "What's in it for me" when a user of communication device 110 is executing a chat, instant message (IM) based or other text messaging application. In this case, using application dependent prediction, word prediction logic 410 may regard "wiifm" as a misspelling when communication device 110 is executing a word processing type application, but may correctly identify "wiifm" as corresponding to the input 94436 when communication device 110 is executing a chat, IM or other messaging application.

As another example, suppose that the user enters 4656 via keypad 250 (which may correspond to "holo") while the user is interacting with a chat, IM or other messaging application. In this case, word prediction logic 410 may determine that the user intended to enter 4646 via keypad, which corresponds to "ihmo," which is a commonly used slang/shorthand used in chat programs as a quick way to indicate the phrase "in my humble opinion." Therefore, since the term "imho" may be stored in word prediction database 420 with the tag of "chat" or "messaging" in field 530, word prediction logic 410 may determine that the user intended to enter 4646 (as opposed to 4656) and may provide the candidate word/term "imho" as a candidate word/term in response to the entering of 4646.

Further, in some implementations, word prediction logic 410 may also identify misspellings based on, for example, ergonomic considerations, such as buttons that are located close to each other (e.g., "i" (4 on keypad 250) and "j" (5 on keypad 250)), ordinary misspellings (e.g., the user does not know whether a friend's name is spelled "Anderson" or "Andersen" and inputs or provides the incorrect input), and other misspellings. In one implementation, ergonomic misspellings may be identified by using a database that stores information identifying the buttons that are located close to each other and the letters corresponding to these closely spaced buttons. In this manner, word prediction logic 410 may use this ergonomic information associated with closely located buttons and corresponding input characters (e.g., letters) to identify misspellings that may include one or more minor deviations (e.g., one digit input by the user does not correspond to the candidate word). In other implementations, word prediction logic 410 may identify other incorrect inputs (e.g., one or more wrong inputs or wrong sequences of inputs) that are commonly input incorrectly. The information regarding incorrect inputs may be based on previous incorrect inputs for each application that a user corrected and/or that word prediction logic 410 corrected. Alternatively, the information regarding common incorrectly input words/terms/phrases may be provided from an external entity and stored for access by word prediction logic 410. In each case, word prediction logic 410 may then provide the word/term that closely matches the input from the user and that is spelled or input correctly. That is, word prediction logic 410 may provide a word/term that corresponds to the input provided by the user without the spelling or other input error. Word prediction logic 410 may also perform grammar related checking. For example, word prediction logic 410 may automatically correct grammar related errors input by the user. In this manner, word prediction logic 410 may use information identifying words or phrases commonly used in various applications to aid in performing application dependent word prediction that accounts for ergonomic misspellings, grammatical errors/misspellings and various other misspellings and input errors.

As discussed above, in some implementations, the word prediction database accessed by word prediction logic 410 (e.g., word prediction database 420) is located on communication device 110. In other implementations, word prediction logic 410 may access a word prediction database stored or located externally with respect to communication device 110, such as on an external server. In this case, word prediction logic 410 may access the external word prediction database as needed via, for example, network 140.

### CONCLUSION

Implementations consistent with the aspects described herein provide for more efficient input prediction using application dependent character prediction, next character prediction, word completion, word prediction, next word prediction and/or phrase prediction. This may provide for enhanced user experience with respect to entering text. This enhanced functionality may also ease user frustration with respect to entering text, thereby increasing the use of various programs, such as text messaging programs. Such increased use of text messaging may also increase revenue for a service provider associated with the receipt and transmission of messages.

The foregoing description of the embodiments of the invention provides illustration and description, but is not intended to be exhaustive or to limit the invention to the precise form disclosed. Modifications and variations are possible in light of the above teachings or may be acquired from practice of the invention.

For example, aspects described above focus on certain types of tag/other information (e.g., application program, name, article of speech, time, location, etc.). It should be understood, however, that any types of more sophisticated or detailed information may be used to enhance the word prediction process.

In addition, in some implementations, word prediction logic 410 may generate candidate words based on information included in various files played by communication device 110, such as audio files, video files, etc. In the case of audio files (e.g., pod casts), communication device 110 may include speech recognition software to analyze what was said and may use this information to generate information for word prediction database 420. In the case of video clips, communication device 110 may perform optical character recognition (OCR) on subtitles, and/or perform speech recognition/analysis of lip movement to generate words and/or phrases for storage in word prediction database 420. In each case, the information in word prediction database 420 may then be used to aid in word prediction.

In addition, aspects described above refer to using a single word prediction database 420 to aid in word prediction. In other implementations, multiple databases may be used. For example, in one alternative implementation, separate databases may be used for each application being executed by communication device 110. That is, separate word prediction databases associated with, for example, each of a contacts program, an e-mail program, a chat/IM program, a task list, games, and a blog may be created and accessed based on the particular application being executed by communication device 110 to identify candidate characters, words, next words, etc. In addition, in some implementations, multiple ones of these databases may be accessed concurrently to identify candidate characters, words, terms, next words, etc. Alternatively, a single database may be used with the database being divided into sections corresponding to each application. That is, words associated with the various applications may be divided according to the particular application. In still other implementations, a number of applications, such as related applications, may share a database or field in the database. For example, various game related applications may share a database and/or a field, a number of types of text messaging applications (e.g., email, IM, etc.) may share a database and/or a field, etc.

Still further, the database(s) used by word prediction logic 410 may provide associations for various type of graphical user interface (GUI) objects used to input information. For example, a particular type of GUI object may be frequently used to input information/text associated with a particular program. In this case, the word prediction database (e.g., word prediction database 420) may include information in a field indicating the particular GUI object associated with the word/term and word prediction logic 410 may use this information to aid in input prediction.

In addition, various fields and/or databases may be dynamically merged based on what the user inputs/writes. For example, word prediction logic 410 may determine that the user tends to write in a similar way in two or more applications. In this case, word prediction logic 410 may merge all or a portion of the words/databases associated with the two or more applications. Alternatively, word prediction logic 410 may cross-correlate the words/terms associated with the two or more applications so that the words/terms associated with the two or more applications are shared or searched by word prediction logic 410 when attempting to identify candidate characters, words, terms, phrases, etc. Conversely, word prediction logic 410 may split words/databases associated with two or more applications when the writing styles associated with the two or more applications are significantly different or diverse. Still further, in some implementations, all text input/written by a user when interacting with one or more applications may be logged and stored in a "writing history" cache or memory to aid in input prediction.

Additionally, in some implementations, word prediction logic 410 may associate text input/writing with certain activities. For example, word prediction logic 410 may associate what is written when a user is viewing images with image related applications, regardless of what application the user is interacting with during the text input/writing.

In some implementations, certain words may be stored in, for example, word prediction database 420, such that word prediction logic 410 accesses/searches these words for certain applications. For example, certain "private words" may be used in a messaging application, but may not be applicable to other applications. In such cases, word prediction logic 410 may tag these words in, for example, word prediction database 420, as being relevant only for particular applications. Word prediction logic 410 may then exclude these words as potential candidates for other applications.

Aspects described above refer to including multiple pieces of information in various fields, such as fields 530 and 540. In other implementations, one field in database 420 may be used for each application. For example, one field may identify an application, such as a messaging application, and identify words associated with the messaging application.

Additionally, in some implementations, cached information may be used in different applications to enhance prediction by word prediction logic 410. For example, information identifying web sites and/or web pages accessed by communication device 110 may be stored in a cache and used to enhance input prediction when the user of communication device 110 is interacting with, for example, a web browser. Information associated with various images, such as images or pictures in a photo album may also be cached. For example, images may be scanned using image recognition technology to identify words or names associated with the images. This information may then be stored in a cache and used to aid input prediction. In still other implementations, voice information from movies played by communication device 110 may be converted to text using a voice-to-text engine and/or subtitle information from movies played by communication device 110 may be scanned using, for example, OCR technology. The text associated with the movie may then be stored in a cache to aid in word prediction. For example, word prediction logic 410 may access the cache of words associated with the movie to attempt to identify candidate words that are being input by the user. In this manner, word prediction logic 410 may use various media types, such as video, sound and image related media to aid in the prediction of characters, next characters, words, next words and phrases.

Further, while series of acts have been described with respect to Fig. 6, the order of the acts may be varied in other implementations consistent with the invention. Moreover, non-dependent acts may be performed in parallel.

It will also be apparent to one of ordinary skill in the art that aspects of the invention, as described above, may be implemented in, for example, computer devices, cellular communication devices/systems, methods, and/or computer program products. Accordingly, the present invention may be embodied in hardware and/or in software (including firmware, resident software, micro-code, etc.). Furthermore, aspects of the invention may take the form of a computer program product on a computer-usable or computer-readable storage medium having computer-usable or computer-readable program code embodied in the medium for use by or in connection with an instruction execution system. The actual software code or specialized control hardware used to implement aspects consistent with the principles of the invention is not limiting of the invention. Thus, the operation and behavior of the aspects were described without reference to the specific software code--it being understood that one of ordinary skill in the art would be able to design software and control hardware to implement the aspects based on the description herein.

Further, certain portions of the invention may be implemented as "logic" that performs one or more functions. This logic may include hardware, such as a processor, a microprocessor, an application specific integrated circuit or a field programmable gate array, software, or a combination of hardware and software.

It should be emphasized that the term "comprises/comprising" when used in this specification is taken to specify the presence of stated features, integers, steps, or components, but does not preclude the presence or addition of one or more other features, integers, steps, components, or groups thereof.

No element, act, or instruction used in the description of the present application should be construed as critical or essential to the invention unless explicitly described as such. Also, as used herein, the article "a" is intended to include one or more items. Where only one item is intended, the term "one" or similar language is used. Further, the phrase "based on," as used herein is intended to mean "based, at least in part, on" unless explicitly stated otherwise.

The scope of the invention is defined by the claims.

## Claims

1. A communication device (120), comprising:
an input device (340) configured to receive input from a user; wherein the communication device (120) comprises:
a memory (330) comprising a database (420), where the database (420) comprises a plurality of entries (550-558), each entry comprising an input field (510), a word/term field (520), a tag field (530) and an other information field (540); wherein,
the input field (510) corresponds to the input from the user;
the tag field (530) identifies an application of a plurality of applications stored on the communication device (120);
the word/term field (520) identifies a word; and
the other information field (540) identifies time of usage information, or location information;
a display (230); and
a processor configured to:
identify a first application of the plurality of applications stored on the communication device (120), the first application being currently executed by the communication device (120);
identify a first candidate word in the word/term field (520) of a first entry (550), the first candidate word corresponding to the input received from the user and the first application, wherein an input in the input field (510) of the first entry (550) matches the input received from the user, and an application in the tag field (530) of the first entry (550) matches the first application;
identify a second candidate word in the word/term field (520) of a second entry (554), the second candidate word also corresponding to the input received from the user, wherein an input in the input field (510) of the second entry (554) matches the input received from the user, an application in the tag field (530) of the second entry (554) being currently not executed by the communication device (120); and
provide the first and second candidate words via the display (230), the first candidate word being provided more prominently on the display (230) than the second candidate word.

2. The communication device (120) of claim 1, where when identifying the first and the second candidate words, the processor is configured to:
access the database (420) to identify the first and the second candidate words from the plurality of entries (550-558).

3. The communication device (120) of claim 1, where the memory (330) is configured to store next word candidates associated with at least some of the plurality of entries (550-558), where the processor is further configured to:
identify, using the memory (330), a next word that the user intends to input based on at least one previous word input by the user.

4. The communication device (120) of any of the claims 1-3, where the communication device (120) is a mobile terminal.

5. A method, performed by a communication device (120), the method comprising:
storing a plurality of entries (550-558) in a database (420), each entry comprising an input field (510), a word/term field (520), a tag field (530) and an other information field (540); wherein,
the input field (510) corresponds to the input from the user;
the tag field (530) identifies an application of a plurality of applications stored on the communication device (120);
the word/term field (520) identifies a word; and
the other information field (540) identifies time of usage information, or location information;
receiving input from a user via a keypad (250);
identifying a first application of a plurality of applications stored on the communication device (120), the first application being currently executed by the communication device (120);
identifying a first candidate word in the word/term field (520) of a first entry (550), the first and candidate word corresponding to the input received from the user and the first application, wherein an input in the input field (510) of the first entry (550) matches the input received from the user, and an application in the tag field (530) of the first entry (550) matches the first application;
identifying a second candidate word in the word/term field (520) of a second entry (554), the second candidate word also corresponding to the input received from the user, wherein an input in the input field (510) of the second entry (554) matches the input received from the user, an application in the tag field (530) of the second entry (554) being currently not executed by the communication device (120); and
providing the first and second candidate words via a display (230), the first candidate word being provided higher on the display (230) or more prominently on the display (230) than the second candidate word.

6. The method of claim 5, where the identifying the first and second candidate words comprises: accessing the database (420) to identify the first and the second candidate words from the plurality of entries (550-558).

7. The method of claim 5, further comprising:
storing, in a memory (330), next word candidates associated with at least some of the entries (550-558); and
identifying, using the memory (330), a next word that the user intends to input based on at least one previous word input by the user.

8. A computer-readable memory device having stored thereon sequences of instructions which, when executed by at least one processor, cause at least one processor to:
store a plurality of entries (550-558) in a database (420), each entry comprising an input field (510), a word/term field (520), a tag field (530) and an other information field (540); wherein,
the input field (510) corresponds to the input from the user;
the tag field (530) identifies an application of a plurality of stored applications; the word/term field (520) identifies a word; and
the other information field (540) identifies time of usage information, or location information;
receive input from the user;
identify a first application of the plurality of stored applications, the first application being currently executed;
identify a first candidate word in the word/term field (520) of a first entry (550), the first candidate word corresponding to the input received from the user and the first application, wherein an input in the input field (510) of the first entry (550) matches the input received from the user, and an application in the tag field (530) of the first entry (550) matches the first application;
identify a second candidate word in the word/term field (520) of a second entry (554), the second candidate word also corresponding to the input received from the user, wherein an input in the input field (510) of the second entry (554) matches the input received from the user, an application in the tag field (530) of the second entry (554) being currently not executed; and
output the first and second candidate words to a display (230), the second candidate word being provided less prominently on the display (230) than the first candidate word.

9. The computer-readable memory device of claim 8, further including instructions for causing the at least one processor to:
identify, based on information stored in a database (420), a next word that the user intends to input based on at least one previous word input by the user.

## Patentansprüche

1. Kommunikationsgerät (120), umfassend:
ein Eingabegerät (340), welches konfiguriert ist, um eine Eingabe von einem Benutzer zu empfangen;
wobei das Kommunikationsgerät (120) umfasst:
einen Speicher (330), welcher eine Datenbank (420) umfasst, wobei die Datenbank (420) eine Vielzahl von Einträgen (550-558) umfasst, wobei jeder Eintrag ein Eingabefeld (510), ein Wort-/Begriffsfeld (520), ein Markierungsfeld (530) und ein anderes Informationsfeld (540) umfasst; wobei,
das Eingabefeld (510) der Eingabe von dem Benutzer entspricht;
das Markierungsfeld (530) eine Anwendung aus einer Vielzahl von Anwendungen identifiziert, welche auf dem Kommunikationsgerät (120) gespeichert sind;
das Wort-/Begriffsfeld (520) ein Wort identifiziert; und
das andere Informationsfeld (540) Nutzungszeitinformationen oder Standortinformationen identifiziert;
eine Anzeige (230);
und einen Prozessor, welcher konfiguriert ist, zum:
Identifizieren einer ersten Anwendung der Vielzahl von Anwendungen, welche auf dem Kommunikationsgerät (120) gespeichert sind, wobei die erste Anwendung derzeit von dem Kommunikationsgerät (120) ausgeführt wird;
Identifizieren eines ersten Kandidatenworts im Wort-/Begriffsfeld (520) eines ersten Eintrags (550), wobei das erste Kandidatenwort der vom Benutzer empfangenen Eingabe und der ersten Anwendung entspricht, wobei eine Eingabe in dem Eingabefeld (510) des ersten Eintrags (550) der vom Benutzer empfangenen Eingabe entspricht, und eine Anwendung in dem Markierungsfeld (530) des ersten Eintrags (550) der ersten Anwendung entspricht;
Identifizieren eines zweiten Kandidatenworts im Wort-/Begriffsfeld (520) eines zweiten Eintrags (554), wobei das zweite Kandidatenwort auch der vom Benutzer empfangenen Eingabe entspricht, wobei eine Eingabe in dem Eingabefeld (510) des zweiten Eintrags (554) mit der vom Benutzer empfangenen Eingabe übereinstimmt, wobei eine Anwendung in dem Markierungsfeld (530) des zweiten Eintrags (554) derzeit nicht von dem Kommunikationsgerät (120) ausgeführt wird; und
Bereitstellen des ersten und des zweiten Kandidatenworts über die Anzeige (230), wobei das erste Kandidatenwort auf der Anzeige (230) stärker hervorgehoben als das zweite Kandidatenwort bereitgestellt wird.

2. Kommunikationsgerät (120) nach Anspruch 1, wobei der Prozessor beim Identifizieren des ersten und des zweiten Kandidatenworts konfiguriert ist zum:
Zugreifen auf die Datenbank (420), um das erste und das zweite Kandidatenwort aus der Vielzahl von Einträgen (550-558) zu identifizieren.

3. Kommunikationsgerät (120) nach Anspruch 1, wobei der Speicher (330) konfiguriert ist, um nächste Wortkandidaten zu speichern, welche mit zumindest Einigen der Vielzahl von Einträgen (550-558) assoziiert sind, wobei der Prozessor weiter konfiguriert ist zum:
Unter Verwendung des Speichers (330) identifizieren eines nächsten Wortes, welches der Benutzer einzugeben vorhat, basierend auf mindestens einem vorhergehenden Wort, welches der Benutzer eingegeben hat.

4. Kommunikationsgerät (120) nach einem der Ansprüche 1-3, wobei das Kommunikationsgerät (120) ein mobiles Endgerät ist.

5. Verfahren, welches von einem Kommunikationsgerät (120) durchgeführt wird, wobei das Verfahren umfasst:
Speichern einer Vielzahl von Einträgen (550-558) in einer Datenbank (420), wobei jeder Eintrag ein Eingabefeld (510), ein Wort/Begriffsfeld (520), ein Markierungsfeld (530) und ein anderes Informationsfeld (540) umfasst; wobei,
das Eingabefeld (510) der Eingabe von dem Benutzer entspricht;
das Markierungsfeld (530) eine Anwendung aus einer Vielzahl von Anwendungen identifiziert, welche auf dem Kommunikationsgerät (120) gespeichert sind;
das Wort-/Begriffsfeld (520) ein Wort identifiziert; und
das andere Informationsfeld (540) Nutzungszeitinformationen oder Standortinformationen identifiziert;
Empfangen einer Eingabe von einem Benutzer über eine Tastatur (250);
Identifizieren einer ersten Anwendung einer Vielzahl von Anwendungen, welche auf dem Kommunikationsgerät (120) gespeichert sind, wobei die erste Anwendung derzeit von dem Kommunikationsgerät (120) ausgeführt wird;
Identifizieren eines ersten Kandidatenworts im Wort/Begriffsfeld (520) eines ersten Eintrags (550), wobei das erste und Kandidatenwort der vom Benutzer empfangenen Eingabe und der ersten Anwendung entspricht, wobei eine Eingabe im Eingabefeld (510) des ersten Eintrags (550) der vom Benutzer erhaltenen Eingabe entspricht und eine Anwendung in dem Markierungsfeld (530) des ersten Eintrags (550) der ersten Anwendung entspricht;
Identifizieren eines zweiten Kandidatenworts in dem Wort-/Begriffsfeld (520) eines zweiten Eintrags (554), wobei das zweite Kandidatenwort auch der vom Benutzer empfangenen Eingabe entspricht, wobei eine Eingabe in dem Eingabefeld (510) des zweiten Eintrags (554) mit der vom Benutzer empfangenen Eingabe übereinstimmt, wobei eine Anwendung in dem Markierungsfeld (530) des zweiten Eintrags (554) derzeit nicht von dem Kommunikationsgerät (120) ausgeführt wird; und
Bereitstellen des ersten und zweiten Kandidatenworts über eine Anzeige (230), wobei das erste Kandidatenwort höher auf der Anzeige (230) oder stärker auf der Anzeige (230) hervorgehoben als das zweite Kandidatenwort bereitgestellt wird.

6. Verfahren nach Anspruch 5, wobei das Identifizieren des ersten und des zweiten Kandidatenworts umfasst: Zugreifen auf die Datenbank (420), um das erste und das zweite Kandidatenwort aus der Vielzahl von Einträgen (550-558) zu identifizieren.

7. Verfahren nach Anspruch 5, weiter umfassend:
Speichern von nächsten Wortkandidaten, welche mit zumindest Einigen der Einträge (550-558) assoziiert sind, in einem Speicher (330); und
Identifizieren unter Verwendung des Speichers (330) eines nächsten Wortes, welches der Benutzer einzugeben vorhat, basierend auf mindestens einem vorhergehenden Wort, welches der Benutzer eingegeben hat.

8. Computerlesbares Speichergerät mit darauf gespeicherten Befehlssequenzen, welche, wenn sie von mindestens einem Prozessor ausgeführt werden, bewirken, dass mindestens ein Prozessor veranlasst wird zum:
Speichern einer Vielzahl von Einträgen (550-558) in einer Datenbank (420), wobei jeder Eintrag ein Eingabefeld (510), ein Wort-/Begriffsfeld (520), ein Markierungsfeld (530) und ein anderes Informationsfeld (540) umfasst; wobei,
das Eingabefeld (510) der Eingabe von dem Benutzer entspricht;
das Markierungsfeld (530) eine Anwendung aus einer Vielzahl von gespeicherten Anwendungen identifiziert;
das Wort-/Begriffsfeld (520) ein Wort identifiziert; und
das andere Informationsfeld (540) Nutzungszeitinformationen oder Standortinformationen identifiziert;
Empfangen einer Eingabe von dem Benutzer;
Identifizieren einer ersten Anwendung aus der Vielzahl der gespeicherten Anwendungen, wobei die erste Anwendung derzeit ausgeführt wird;
Identifizieren eines ersten Kandidatenworts im Wort-/Begriffsfeld (520) eines ersten Eintrags (550), wobei das erste Kandidatenwort der vom Benutzer empfangenen Eingabe und der ersten Anwendung entspricht, wobei eine Eingabe in dem Eingabefeld (510) des ersten Eintrags (550) der vom Benutzer empfangenen Eingabe entspricht und eine Anwendung in dem Markierungsfeld (530) des ersten Eintrags (550) der ersten Anwendung entspricht;
Identifizieren eines zweiten Kandidatenworts im Wort-/Begriffsfeld (520) eines zweiten Eintrags (554), wobei das zweite Kandidatenwort auch der vom Benutzer empfangenen Eingabe entspricht, wobei eine Eingabe in dem Eingabefeld (510) des zweiten Eintrags (554) mit der vom Benutzer empfangenen Eingabe übereinstimmt, wobei eine Anwendung in dem Markierungsfeld (530) des zweiten Eintrags (554) derzeit nicht ausgeführt wird; und
Ausgeben des ersten und zweiten Kandidatenworts auf einer Anzeige (230), wobei das zweite Kandidatenwort auf der Anzeige (230) weniger stark hervorgehoben ist als das erste Kandidatenwort.

9. Computerlesbares Speichergerät nach Anspruch 8, weiter umfassend Befehle, um den mindestens einen Prozessor zu veranlassen zum:
Identifizieren, basierend auf Informationen, welche in einer Datenbank (420) gespeichert sind, eines nächsten Wortes, welches der Benutzer einzugeben vorhat, basierend auf mindestens einem vorherigen Wort, welches der Benutzer eingegeben hat.

## Revendications

1. Dispositif de communication (120) comprenant :
un dispositif de saisie (340) conçu pour recevoir une saisie d'un utilisateur ; dans lequel le dispositif de communication (120) comprend :
une mémoire (330) comprenant une base de données (420), dans lequel la base de données (420) comprend une pluralité d'entrées (550 à 558), chaque entrée comprenant un champ de saisie (510), un champ de mot/terme (520), un champ d'étiquette (530) et un champ d'autre information (540) ; dans lequel :
le champ de saisie (510) correspond à la saisie de l'utilisateur ;
le champ d'étiquette (530) identifie une application d'une pluralité d'applications stockées dans le dispositif de communication (120) ;
le champ de mot/terme (520) identifie un mot ; et
le champ d'autre information (540) identifie une information de moment d'utilisation ou une information de lieu ;
un dispositif d'affichage (230) ; et
un processeur conçu pour :
identifier une première application de la pluralité d'applications stockées dans le dispositif de communication (120), la première application étant en cours d'exécution par le dispositif de communication (120) ;
identifier un premier mot candidat dans le champ de mot/terme (520) d'une première entrée (550), le premier mot candidat correspondant à la saisie reçue de l'utilisateur et à la première application, dans lequel une saisie dans le champ de saisie (510) de la première entrée (550) concorde avec la saisie reçue de l'utilisateur, et une application dans le champ d'étiquette (530) de la première entrée (550) concorde avec la première application ;
identifier un second mot candidat dans le champ de mot/terme (520) d'une seconde entrée (554), le second mot candidat correspondant également à la saisie reçue de l'utilisateur, dans lequel une saisie dans le champ de saisie (510) de la seconde entrée (554) concorde avec la saisie reçue de l'utilisateur, une application dans le champ d'étiquette (530) de la seconde entrée (554) n'étant pas en cours d'exécution par le dispositif de communication (120) ; et
délivrer les premier et second mots candidats par le biais du dispositif d'affichage (230), le premier mot candidat étant délivré en étant mis plus en évidence sur le dispositif d'affichage (230) que le second mot candidat.

2. Dispositif de communication (120) selon la revendication 1, dans lequel lors de l'identification des premier et second mots candidats, le processeur est conçu pour :
accéder à la base de données (420) afin d'identifier les premier et second mots candidats parmi la pluralité d'entrées (550 à 558).

3. Dispositif de communication (120) selon la revendication 1, dans lequel la mémoire (330) est conçue pour stocker des prochains mots candidats associés à au moins certaines entrées de la pluralité d'entrées (550 à 558), dans lequel le processeur est conçu en outre pour :
identifier, à l'aide de la mémoire (330), un prochain mot que l'utilisateur a l'intention de saisir, sur la base d'au moins un mot précédent saisi par l'utilisateur.

4. Dispositif de communication (120) selon l'une quelconque des revendications 1 à 3, dans lequel le dispositif de communication (120) est un terminal mobile.

5. Procédé mis en oeuvre par un dispositif de communication (120), le procédé comprenant les étapes suivantes :
stocker une pluralité d'entrées (550 à 558) dans une base de données (420), chaque entrée comprenant un champ de saisie (510), un champ de mot/terme (520), un champ d'étiquette (530) et un champ d'autre information (540) ; dans lequel :
le champ de saisie (510) correspond à la saisie de l'utilisateur ;
le champ d'étiquette (530) identifie une application d'une pluralité d'applications stockées dans le dispositif de communication (120) ;
le champ de mot/terme (520) identifie un mot ; et
le champ d'autre information (540) identifie une information de moment d'utilisation ou une information de lieu ;
recevoir une saisie d'un utilisateur par le biais d'un bloc de touches (250) ;
identifier une première application d'une pluralité d'applications stockées dans le dispositif de communication (120), la première application étant en cours d'exécution par le dispositif de communication (120) ;
identifier un premier mot candidat dans le champ de mot/terme (520) d'une première entrée (550), le premier mot candidat correspondant à la saisie reçue de l'utilisateur et à la première application, dans lequel une saisie dans le champ de saisie (510) de la première entrée (550) concorde avec la saisie reçue de l'utilisateur, et une application dans le champ d'étiquette (530) de la première entrée (550) concorde avec la première application ;
identifier un second mot candidat dans le champ de mot/terme (520) d'une seconde entrée (554), le second mot candidat correspondant également à la saisie reçue de l'utilisateur, dans lequel une saisie dans le champ de saisie (510) de la seconde entrée (554) concorde avec la saisie reçue de l'utilisateur, une application dans le champ d'étiquette (530) de la seconde entrée (554) n'étant pas en cours d'exécution par le dispositif de communication (120) ; et
délivrer les premier et second mots candidats par le biais d'un dispositif d'affichage (230), le premier mot candidat étant délivré plus haut sur le dispositif d'affichage (230) ou plus en évidence sur le dispositif d'affichage (230) que le second mot candidat.

6. Procédé selon la revendication 5, dans lequel l'identification des premier et second mots candidats comprend l'étape suivante : accéder à la base de données (420) pour identifier les premier et second mots candidats parmi la pluralité d'entrées (550 à 558).

7. Procédé selon la revendication 5, comprenant en outre les étapes suivantes :
stocker, dans une mémoire (330), les prochains mots candidats associés à au moins certaines des entrées (550 à 558) ; et
identifier, à l'aide de la mémoire (330), un prochain mot que l'utilisateur a l'intention de saisir, sur la base d'au moins un précédent mot saisi par l'utilisateur.

8. Dispositif de mémoire lisible par ordinateur, dans lequel sont stockées des séquences d'instructions qui, lorsqu'elles sont exécutées par au moins un processeur, font qu'au moins un processeur :
stocke une pluralité d'entrées (550 à 558) dans une base de données (420), chaque entrée comprenant un champ de saisie (510), un champ de mot/terme (520), un champ d'étiquette (530) et un champ d'autre information (540) ; dans lequel :
le champ de saisie (510) correspond à la saisie de l'utilisateur ;
le champ d'étiquette (530) identifie une application d'une pluralité d'applications stockées ;
le champ de mot/terme (520) identifie un mot ; et
le champ d'autre information (540) identifie une information de moment d'utilisation ou une information de lieu ;
reçoive une saisie de l'utilisateur ;
identifie une première application de la pluralité d'applications stockées, la première application étant en cours d'exécution ;
identifie un premier mot candidat dans le champ de mot/terme (520) d'une première entrée (550), le premier mot candidat correspondant à la saisie reçue de l'utilisateur et à la première application, dans lequel une saisie dans le champ de saisie (510) de la première entrée (550) concorde avec la saisie reçue de l'utilisateur, et une application dans le champ d'étiquette (530) de la première entrée (550) concorde avec la première application ;
identifie un second mot candidat dans le champ de mot/terme (520) d'une seconde entrée (554), le second mot candidat correspondant également à la saisie reçue de l'utilisateur, dans lequel une saisie dans le champ de saisie (510) de la seconde entrée (554) concorde avec la saisie reçue de l'utilisateur, une application dans le champ d'étiquette (530) de la seconde entrée (554) n'étant pas en cours d'exécution ; et
délivre en sortie les premier et second mots candidats à un dispositif d'affichage (230), le second mot candidat étant délivré en étant mis moins en évidence sur le dispositif d'affichage (230) que le premier mot candidat.

9. Dispositif de mémoire lisible par ordinateur, selon la revendication 8, comportant en outre des instructions pour faire que l'au moins un processeur :
identifie, sur la base d'informations stockées dans une base de données (420), un prochain mot que l'utilisateur a l'intention de saisir, sur la base d'au moins un mot précédent saisi par l'utilisateur.
